# EUROPEAN PATENT SPECIFICATION

(11) **EP 2 367 698 B1**
(45) Date of publication and mention of the grant of the patent: **14.08.2019**
(21) Application number: 09828734.5
(22) Date of filing: 20.11.2009
(51) Int. Cl.: B60K 6/48, B60K 6/365, F16H 3/72, F16H 37/04

(54) **DRIVE SYSTEM FOR A VEHICLE**
ANTRIEBSSYSTEM FÜR EIN FAHRZEUG
SYSTÈME D'ENTRAÎNEMENT POUR UN VÉHICULE

(30) Priority: 28.11.2008 IN MU25012008; 25.02.2009 IN MU04242009
(43) Date of publication of application: 28.09.2011
(73) Proprietor: Tata Motors Limited, 400 001 Mumbai, Maharashtra (IN)
(72) Inventor: JANARDHANAN, Venkatapathi, Mumbai 400 001 Maharashtra (IN)
(74) Representative: Ruuskanen, Juha-Pekka
(86) International application number: PCT/IN2009/000668
(87) International publication number: WO 2010/061401

(56) References cited:
- EP-A2- 0 941 883
- WO-A1-2005/073005
- WO-A1-2008/062697
- DE-A1- 19 629 235
- DE-A1-102004 045 932
- DE-A1-102005 039 928
- DE-A1-102005 039 928
- US-A1- 2008 258 474
- US-B1- 6 492 742

## Description

### FIELD OF THE INVENTION

The invention related to an automated manual transmission with an integral starter-generator, launch, creep & synchronizing device for a vehicle.

### BACKGROUND OF THE INVENTION

Drive systems for vehicles customarily comprise an internal combustion engine as the driving machine, a subsequent transmission and a friction clutch placed between the internal combustion engine and the transmission or again, comprise a hydrodynamic converter placed between the internal combustion engine and the transmission. The friction clutch or the converter are burdened with losses and present energy losses in the drive train.

In the prior arts, the losses occurring in either in a torque converter or a clutch in a drivetrain is avoided by replacing them with an electromotive unit and a planetary gear drive. In these arts, while driving the vehicle, if the clutch which is used to lock up the planetary set is opened, the engine torque supply to the vehicle drops because the motor also supports part of the vehicle torque requirement. This makes the engine operate at a less efficient region.

US2008/0258474 describes an engine starting control apparatus for a hybrid vehicle comprising a motive drive source, an automatic transmission, an electromotive drive source and a planetary gear system having a sun gear, an internal gear, a planet carrier with one planet gear set, of which the planet carrier is connected to the motive drive source, the internal gear is connected to the transmission and the sun gear is connected to the electromotive drive source; a clutch to provide a lock up between the planet carrier and the sun gear and operable to bypass the planetary gear system.

### SUMMARY OF THE INVENTION

It is therefore an object of the present invention to avoid the losses in the drivetrain and operate the engine in the efficient region.

Another object of the present invention is to avoid the power interruption to the vehicle wheels during gear shift operation by using an additional motor to drive vehicle wheels.

Yet another object of the invention is to integrated starter-generator functions, gear synchronization function, engine-transmission speed matching and regenerative braking function.

There is hereby provided a drive system according to claim 1.

In accord with the invention, it is proposed to place a power synthesizing device which is essentially a planetary gear drive between a driving machine, a transmission, and an electromotive unit of which the said planetary gear drive encompasses the three elements, the sun gear, the internal gear, and the planet carrier with the planet gear sets. Of these three elements, the internal gear is connected to the transmission, the planet carrier is bound to the driving machine, and sun gear is coupled with the electromotive unit. The power synthesizing device is of two types - a power sum up device and a power split device. The power split configuration is proposed if the vehicle launch is purely through motor or in cases where the engine is used to launch, then the engine produces peak torque at a low speed. The elctromotive unit can behave as a generator or a motor that is; it is of four quadrant type. A clutch is introduced between the sun and the carrier for the lockup or bypass of the planetary gear drive. In another embodiment a one way clutch is provided in the transmission input driveline to prevent anticlockwise rotation of the transmission input shaft. In an additional arrangement, a one way clutch is provided on the engine crank shaft to prevent anticlockwise rotation of the crank shaft for start-stop operation or for the Zero-Emission-Vehicle-operation, that is, powering the vehicle by the electric motor, when the internal combustion engine is not turning. An additional motor / generator can be connected to the transmission output shaft to drive the vehicle during the gear shift operation or supports with additional torque during vehicle acceleration, launch or supports vehicle braking. A battery is provided for storing the electrical energy produced & reuse it when required.

### BRIEF DESCRIPTION OF THE DRAWINGS

The invention will now be described, by way of example, with reference to the accompanying drawings in which:
FIG. 1 is a sketch of drive system according to the present invention with the power synthesizing device being a power split planetary arrangement
FIG. 2 is a sketch of drive system according to the present invention with the power synthesizing device being a power sum up planetary arrangement.
FIG. 3 is an example in accord with FIG. 1 with a one way clutch between the transmission input shaft and the transmission housing.
FIG. 4 is an example in accord with FIG. 1 with a one way clutch between the engine output shaft and the engine housing.
FIG. 5 is an example in accord with FIG. 1 with an additional electromotive device which drives the transmission output shaft.

### DETAILED DESCRIPTION OF THE INVENTION

Referring now to the drawings wherein the showings are for the purpose of illustrating examples, and not for the purpose of limiting the same.

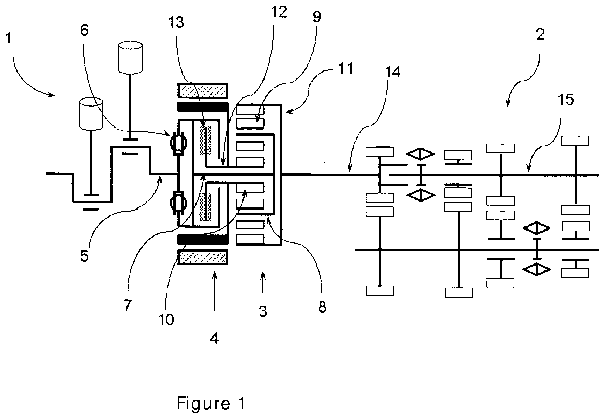

Figure 1 presents a sketch of the arrangement of a system. The system consists of a motive drive source (1), a power synthesizing planetary system (3), generator /motor (4) and a transmission (2). At the crank shaft (5) of a drive source (1), a torsional vibration damper (6) is installed, which is connected with the planet carrier (8) of planetary system (3) through the planet carrier shaft (7). The power synthesizing planetary system (3) in this embodiment is in power split configuration. The power synthesizing planetary system (3) in power split configuration consists of a planet carrier (8), an internal gear (11), a planet gear set (9) and a sun gear (10). The planet carrier (8) carries planet gear set (9) having at least two planet gears. The planet gears mesh with both the sun gear (10) and the internal gear (11). The sun gear (10) is connected with a hollow shaft (12) which is connected to a lock up clutch (13). The lock up clutch (13) establishes a rigid connection between the planet carrier (8) and the sun gear (10) when it is required to bypass the power synthesizing planetary system (3). An electromotive unit (4) is connected to the sun gear (10) through the hollow shaft (12). The electromotive unit (4) can behave as a generator or a motor. The internal gear (11) is connected to the transmission input shaft (14). The transmission (2) in the figures 1, 2, 3, 4 and 5 is representative only. The transmission (2) has an output shaft (15). The transmission output shaft 15 drives the wheels. The transmission (2) can be a transaxle also.

The drive source (1) drives the torsional vibration damper (6) which in turn drives the planet carrier shaft (7). The planet carrier shaft (7) drives the planet carrier (8) which in turn drives the sun gear (10) and the internal gear (11) through the planet gear set (9). The sun gear (10) drives the motor / generator (4). The internal gear (11) drives the transmission input shaft (14). The transmission output shaft (15) drives the wheels. In this power split configuration of the planetary system (3), when the lock up clutch (13) is in open condition the engine power is split between the transmission (2) and the electromotive unit (4). This opeartes the engine (1) in a more efficient region.

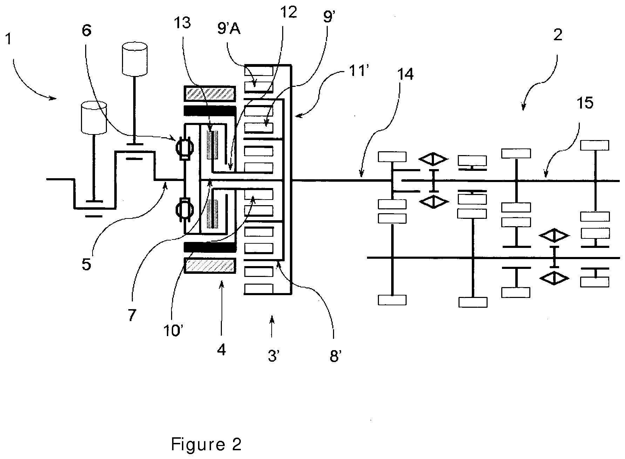

Referring to the Figure 2, shows an embodiment with a power synthesizing device (3') being in a power sum up configuration of the planetary gear system. The power synthesizing planetary system (3') in power sum up configuration consists of a planet carrier (8'), an internal gear (11'), two planet gear sets (9') & (9'A) and a sun gear (10'). The planet carrier (8') carries planet gear sets (9') & (9'A). The planet gear set (9') meshes with the sun gear (10') and planet gear set (9'A). The planet gear set (9'A) meshes with the internal gear (11').

The drive source (1) drives the torsional vibration damper (6) which in turn drives the planet carrier shaft (7). The planet carrier shaft (7) drives the planet carrier (8') which in turn drives the sun gear (10') and the internal gear (11') through the planet gear sets (9') & (9'A). The sun gear (10') drives the motor / generator (4). The internal gear (11') drives the transmission input shaft (14). The transmission output shaft (15) drives the wheels.

In this power sum up configuration of the planetary system (3'), when the lock up clutch (13) is in open condition the engine torque and the torque of the electromotive unit (4) is added and fed into the transmission (2). This addition of torques helps the vehicle launch in steep grades with ease. The lock up clutch (13) establishes a rigid connection between the planet carrier (8') and the sun gear (10') when it is required to bypass the power synthesizing planetary system (3').

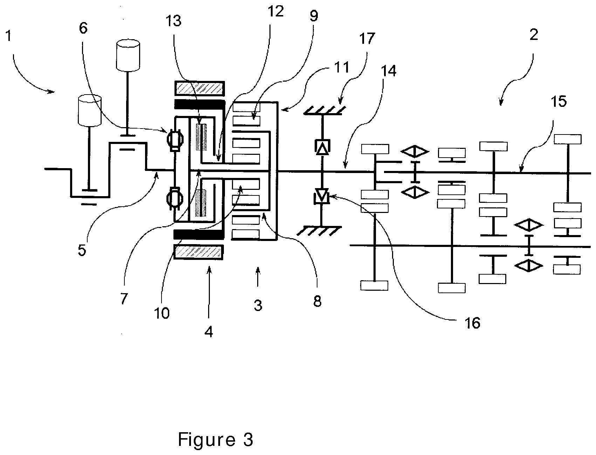

Referring to Figure 3, shows a comparative example with a one way clutch (16) connecting the transmission input shaft (14) and the transmission housing (17) (stationary). The one way clutch (16) prevents the transmission input shaft (14) from rotating in a direction opposite to that of the rotation of the engine (1). The one way clutch (16) can also be a friction clutch. This embodiment can also have the power synthesizing planetary system (3') in power sum up configuration as shown in figure 2.

This one way clucth or friction clutch (16) at the transmission input shaft (14) prevents the transmission input shaft (14) from rotating to aid the motor (4) to crank the engine (1).

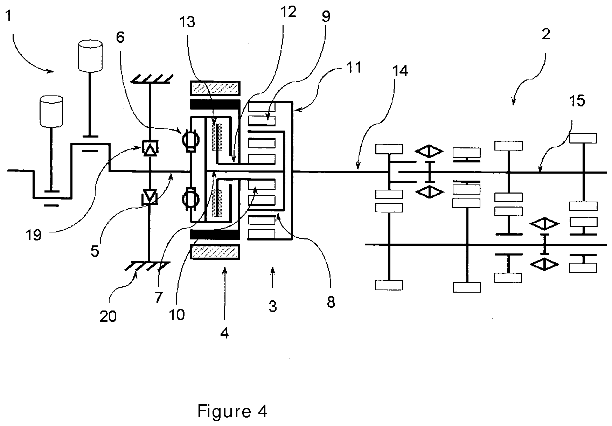

Referring to Figure 4, shows the arrangement with an additional one way clutch (19) which connects the crank shaft (5) and the engine housing (20) (stationary). The one way clutch (19) serves for the drive of the vehicle powered by the electric motor (4), without the necessity that the engine rotates. The one way clutch (19) can also be a friction clutch. This example can additionally have the one way clutch (16) connecting the transmission input shaft (14) and the transmission housing (17) as shown in Figure 3. According to embodiments, these examples can also have the power synthesizing planetary system (3') in power sum up configuration as shown in Figure 2.

When the vehicle purely driven by the motor (4), without the aid of the engine (1), the one way clutch or friction clutch (19) at the engine crank shaft (5) prevents the crank shaft (5) from rotating so as to aid the motor (4) to drive the vehicle.

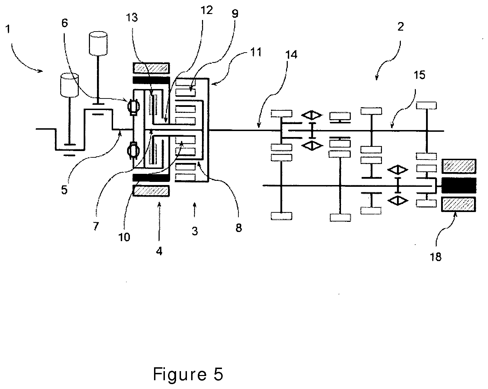

Figure 5 shows another example with an additional support electromotive source - motor/generator (18) connected to the transmission output shaft (15). The support motor/generator (18) drives the transmission output shaft (15) during the gear shift operation, supports with additional torque during vehicle acceleration, launch & supports vehicle braking. This example can additionally have the one way clutches (16) and (19) or any one of them as shown in Figure 3 and 4. According to an embodiment, this example can have the power synthesizing planetary system (3') in power sum up configuration as in Figure 2.

The power synthesizing planetary configuration of the power split type allows for a pure generative mode of the electromotive unit during launch. This configuration also allows for efficient operation of the engine, when the vehicle is driven with the lock up clutch in open condition.

Modern diesel engines produce peak torques at a low speed, permitting large planetary gear ratios, yet running the generator within its speed limits during the start of launch, when the engine is used to launch the vehicle. In this case the part of the engine torque diverted to the generator through the power split device is compensated by minor deepening of the low gear in the transmission. Vehicles which have a higher degree of electrification of its equipment, this low gear deepening may be avoided. Where such a system is not feasible the power sum up planetary arrangement is proposed. The add on / support motor of an additional embodiment supports with additional torque during launch and acceleration and as well aids in gear shifting without power interruption, by driving the vehicle momentarily during gear shift operation. The add on motor also acts as a generator for regenerative braking.

By means of the invented drive system, a more environmentally friendly functioning of the vehicle and a lowering of costs are attained. With the present invention, a drive system is presented, which avoids any friction based starting element. What otherwise would be power lost in slippage, can be now used as additional power for the electrical on-board system. At the same time, use of the electric motor permits an increase of torque and the motor can be employed as a booster element in the concept of additional drive, during an accelerating period.

It should be appreciated that the embodiments are described for purpose of illustration only, and that numerous alterations and modifications may be practiced by those skilled in the art without departing from the scope of the claims. It is intended that all such modifications and alterations be included insofar as they come within the scope of the invention as claimed.

## Claims

1. A drive system for a vehicle comprising; a motive drive source (1), an automated manual transmission (2), an electromotive drive source (4) and a planetary gear system (3) having a sun gear (10), an internal gear (11), and a planet carrier (8) having first and second planet gear sets (9), the first planet gear set meshing with the second planet gear set and the sun gear, and the second planet gear set meshing with the internal gear (11); wherein the planet carrier is connected to the electromotive drive source, the internal gear is connected to the transmission, and the sun gear is connected to the electromotive drive source; and a clutch (13) to provide a lock up between the planet carrier and the sun gear and operable to bypass the planetary gear system.

2. The drive system as claimed in claim 1 wherein the planet gear sets have at least two planet gears each.

3. The drive system as claimed in claim 1 wherein a one way clutch (16) is located between the planet carrier and the electromotive drive source.

4. The drive system as claimed in claim 1 wherein a one way clutch (16) is located between the internal gear and the transmission.

5. The drive system as claimed either claim 3 or claim 4 wherein the one way clutch is a friction clutch.

6. The drive system as claimed either claim 3 or claim 4, wherein the one way clutch is connected between a rotating element (5, 14) and a rigid housing (17, 20).

7. The drive system as claimed in any one of the preceding claims wherein an additional electromotive drive source (18) is connected to a transmission output shaft (15).

## Patentansprüche

1. Antriebssystem für ein Fahrzeug, das Folgendes umfasst: eine motorische Antriebsquelle (1), ein automatisiertes Handschaltgetriebe (2), eine elektromotorische Antriebsquelle (4) und ein Planetenradsystem (3) mit einem Sonnenrad (10), einem Hohlrad (11) und einem Planetenträger (8) mit einem ersten und einem zweiten Planetenradsatz (9), wobei der erste Planetenradsatz mit dem zweiten Planetenradsatz und dem Sonnenrad kämmt und der zweite Planetenradsatz mit dem Hohlrad (11) kämmt; wobei der Planetenträger mit der elektromotorischen Antriebsquelle verbunden ist, das Hohlrad mit dem Getriebe verbunden ist und das Sonnenrad mit der elektromotorischen Antriebsquelle verbunden ist; und eine Kupplung (13) zur Bereitstellung einer Überbrückung zwischen dem Planetenträger und dem Sonnenrad, die dahingehend betreibbar ist, das Planetenradsystem zu umgehen.

2. Antriebssystem nach Anspruch 1, wobei die Planetenradsätze jeweils mindestens zwei Planetenräder aufweisen.

3. Antriebssystem nach Anspruch 1, wobei eine Freilaufkupplung (16) zwischen dem Planetenträger und der elektromotorischen Antriebsquelle positioniert ist.

4. Antriebssystem nach Anspruch 1, wobei eine Freilaufkupplung (16) zwischen dem Hohlrad und dem Getriebe positioniert ist.

5. Antriebssystem entweder nach Anspruch 3 oder Anspruch 4, wobei es sich bei der Freilaufkupplung um eine Reibkupplung handelt.

6. Antriebssystem entweder nach Anspruch 3 oder Anspruch 4, wobei die Freilaufkupplung zwischen einem Drehelement (5, 14) und einem starren Gehäuse (17, 20) verbunden ist.

7. Antriebssystem nach einem der vorhergehenden Ansprüche, wobei eine zusätzliche elektromotorische Antriebsquelle (18) mit einer Getriebeausgangswelle (15) verbunden ist.

## Revendications

1. Système d'entraînement pour un véhicule comprenant : une source d'entraînement motrice (1), une transmission manuelle automatisée (2), une source d'entraînement électromotrice (4) et un système d'engrenage planétaire (3) comportant un planétaire (10), une couronne (11) et un porte-satellites (8) comportant des premier et second ensembles de satellites (9), le premier ensemble de satellites s'engrenant avec le second ensemble de satellites et le planétaire, et le second ensemble de satellites s'engrenant avec la couronne (11) ; le porte-satellites étant raccordé à la source d'entraînement électromotrice, la couronne étant raccordée à la transmission et le planétaire étant raccordé à la source d'entraînement électromotrice ; et un embrayage (13) destiné à assurer un verrouillage entre le porte-satellites et le planétaire et pouvant être mis en oeuvre pour contourner le système d'engrenage planétaire.

2. Système d'entraînement selon la revendication 1, dans lequel les ensembles de satellites comportent au moins deux satellites chacun.

3. Système d'entraînement selon la revendication 1, dans lequel un embrayage unidirectionnel (16) est placé entre le porte-satellites et la source d'entraînement électromotrice.

4. Système d'entraînement selon la revendication 1, dans lequel un embrayage unidirectionnel (16) est placé entre la couronne et la transmission.

5. Système d'entraînement selon l'une ou l'autre de la revendication 3 et la revendication 4, dans lequel l'embrayage unidirectionnel est un embrayage à friction.

6. Système d'entraînement selon l'une ou l'autre de la revendication 3 et la revendication 4, dans lequel l'embrayage unidirectionnel est raccordé entre un élément rotatif (5, 14) et un logement rigide (17, 20) .

7. Système d'entraînement selon l'une quelconque des revendications précédentes, dans lequel une source d'entraînement électromotrice supplémentaire (18) est raccordée à un arbre de sortie de transmission (15) .
